# EUROPÄISCHE PATENTSCHRIFT

(11) **EP 3 260 617 B1**
(45) Veröffentlichungstag und Bekanntmachung des Hinweises auf die Patenterteilung: **10.03.2021**
(21) Anmeldenummer: 17176916.9
(22) Anmeldetag: 20.06.2017
(51) Int. Cl.: E04B 1/68, E06B 1/62, C08J 9/40, C08J 9/42

(54) **DICHTBAND**
SEALING TAPE
BANDE D'ÉTANCHÉITÉ

(30) Priorität: 20.06.2016 DE 102016111284
(43) Veröffentlichungstag der Anmeldung: 27.12.2017
(73) Patentinhaber: Tremco CPG Germany GmbH, 92439 Bodenwöhr (DE)
(72) Erfinder: Komma, Markus, 93133 Burglengenfeld (DE); Pronold, Michael, 92543 Guteneck (DE)
(74) Vertreter: Bittner, Bernhard

(56) Entgegenhaltungen:
- EP-A1- 1 936 246
- EP-A2- 1 795 664
- DE-A1- 2 836 143
- DE-U1-202011 107 000

## Beschreibung

Die vorliegende Erfindung bezieht sich auf ein Dichtband und insbesondere ein Dichtband aus einem Weichschaum, wie insbesondere einem Polyurethan-Weichschaum. Derartige Dichtbänder sind aus dem Stand der Technik seit langem bekannt und können beispielsweise zur Abdichtung von Fugen, beispielsweise Fensterfugen eingesetzt werden. Dabei ist es bekannt, dass derartige Dichtbänder vorkomprimiert und beispielsweise auf Rollen aufgewickelt zur Verfügung gestellt werden. Diese Dichtbänder sind dabei üblicherweise auf Basis eines PU-Weichschaumes ausgebildet und mit einem Imprägnat versehen. Übliche Einsatzbereiche bzw. Verarbeitungstemperaturen dieser Bänder liegen zwischen 5°C und 30°C. Bislang hatten sich derartige Temperaturen als ausreichend erwiesen. In jüngerer Zeit besteht jedoch beispielsweise auch durch die erhöhte globale Erwärmung ein erhöhter Bedarf an Dichtbändern, welche einem höheren Temperaturbereich ausgesetzt werden können und insbesondere auch bei höheren Temperaturen eingesetzt werden können.
EP 1 795 664 A2 offenbart ein gattungsgemäßes Dichtband.

Der vorliegenden Erfindung liegt daher die Aufgabe zugrunde, ein Dichtband zur Verfügung zu stellen, welches auch bei höheren Temperaturbereichen und insbesondere auch zu höheren Temperaturen hin verarbeitungsfähig ist. Diese Aufgabe wird durch den Gegenstand des unabhängigen Patentanspruches erreicht. Vorteilhafte Ausführungsformen und Weiterbildungen sind Gegenstand der Unteransprüche.

Ein erfindungsgemäßes Dichtband weist die Merkmale des Anspruchs 1 auf, wobei das Dichtband einen weichen Polyurethan-Schaumstoff und insbesondere einen Polyurethan-Weichschaum aufweist, welcher zur verzögerten Rückstellung wenigstens teilweise und bevorzugt vollständig mit einem Imprägnatmittel imprägniert ist. Dabei weist dieses Imprägnatmittel eine Acrylatdispersion auf.

Erfindungsgemäß weist der imprägnierte trockene Schaumstoff ein Raumgewicht auf, welches größer ist als 60 kg/m³ und ist das Dichtband mit einem vorgegebenen Komprimierungsgrad auf einer Rolle aufgewickelt und dieser Komprimierungsgrad ist bevorzugt geringer als 15% bezogen auf die Schaumausgangshöhe und höher als 5% bezogen auf die Schaumausgangshöhe.

Durch das erhöhte Raumgewicht kann der Temperaturarbeitsbereich des fertiggestellten Dichtbandes erhöht werden, da eine erhöhte Menge an klebrigem Material eingebracht wurde. Dass dieser Effekt durch eine Erhöhung des Raumgewichtes erreicht werden kann ist, durchaus überraschend, da bislang davon ausgegangen worden war, dass das Raumgewicht des imprägnierten Dichtschaumes zumindest keinen erheblichen Einfluss auf den Verarbeitungsbereich des Dichtbandes hat. Insbesondere auch in Kombination mit dem hohen Komprimierungsgrad konnte überraschender Weise eine Erhöhung des Temperaturbereichs erreicht werden.

Insbesondere ist es auch mithilfe des hier beschriebenen Weichschaums möglich, den Arbeitsbereich um bis zu 10° nach oben zu verschieben. Daher ist es möglich, derartige Dichtbänder auch bei Temperaturen zwischen 15°C und 40°C einzusetzen.

Erfindungsgemäß weist der imprägnierte trockene Schaumstoff ein Raumgewicht auf, welches kleiner ist als 140 kg/m³. Auch diese obere Grenze des Raumgewichtes hat sich als besonders hilfreich erwiesen, um zufriedenstellende Eigenschaften des Dichtbandes mit der hier gewünschten Erhöhung des Temperaturbereiches zu vereinbaren.

Bei einer weiteren vorteilhaften Ausführungsform weist der imprägnierte trockene Schaumstoff ein Raumgewicht auf, welche größer ist als 70 kg/m³ und der imprägnierte trockene Schaumstoff weist ein Raumgewicht auf, welches kleiner ist als 130 kg/m³. Bei einer weiteren vorteilhaften Ausführungsform weist der imprägnierte trockene Schaumstoff ein Raumgewicht auf, welches bevorzugt größer ist als 80 kg/m³, bevorzugt größer als 85 kg/m³ und besonders bevorzugt größer als 90 kg/m³. Bei einer weiteren vorteilhaften Ausführungsform weist der imprägnierte trockene Schaumstoff ein Raumgewicht auf, welches kleiner ist als 120 kg/m³, bevorzugt kleiner als 115 kg/m³ und besonders bevorzugt kleiner als 110 kg/m³. In aufwendigen Untersuchungen konnte die Anmelderin ermitteln, dass insbesondere Raumgewichte zwischen 80 kg/m³ und 120 kg/m³ und im Besonderen auch Raumgewichte zwischen 90 kg/m³ und 110 kg/m³ sich als besonders günstig erwiesen haben, um den benötigten Arbeitsbereich zu erreichen.

Erfindungsgemäß ist das Dichtband mit einem vorgegebenen Komprimierungsgrad auf einer Rolle aufgewickelt und dieser Komprimierungsgrad ist geringer als 15% bezogen auf die Schaumausgangshöhe und höher als 5% bezogen auf die Schaumausgangshöhe. Damit wird bevorzugt vorgeschlagen, dass das Dichtband in seinem aufgerollten Zustand stärker komprimiert wird als dies im Stand der Technik üblich ist. Die Komprimierungsgrade im Stand der Technik liegen üblicherweise bei mehr als 15% bezogen auf die Schaumausgangshöhe. Die Wahl einer stärkeren Komprimierung ist für den Fachmann zunächst nicht wünschenswert, da hierdurch eine Verkürzung der Lagerdauer in Kauf genommen wird. Andererseits lässt sich jedoch durch eine verstärkte Komprimierung eine entsprechend langsamere Rückstellung erreichen, wodurch insbesondere der Einsatz bei höheren Temperaturen erleichtert wird.

Der höhere Komprimierungsgrad ist der Parameter, der den gewünschten Effekt der stärker verzögerten Rückstellung überwiegend erbringt. (Bei sonst gleichen Werten für Raumgewicht (RG), Lagerdauer, Schaumtype, Temperatur.) Die Kombination von stärkerer Komprimierung und erhöhtem RG ergibt eine Synergie, d. h. einen stärkeren Effekt als die Summe der Wirkung der beiden Einzelfaktoren.

Durch die stärkere Komprimierung werden die Schaumstoffzellen enger zusammengedrückt und es kommt auch zu einer langsameren Rückstellung. Besonders bevorzugt ist der Komprimierungsgrad größer als 6% und bevorzugt größer als 7% und besonders bevorzugt größer als 8% und besonders bevorzugt größer als 9% bezogen auf die Schaumausgangshöhe. In einer weiteren bevorzugten Ausführungsform ist der Komprimierungsgrad geringer als 14% und besonders bevorzugt geringer als 13% bezogen auf die Schaumausgangshöhe. Bevorzugt handelt es sich bei dem Weichschaum um einen wenigstens teilweise und bevorzugt vollständig offenzelligen Weichschaum.

Bei einer weiteren vorteilhaften Ausführungsform weist der Polyurethan-Weichschaum eine Stauchhärte auf, welche größer ist als 2 kPa. Besonders bevorzugt liegt die Stauchhärte höher als 2,1 kPa, bevorzugt höher als 2,2 kPa, bevorzugt höher als 2,3 kPa und besonders bevorzugt bei mehr als 2,4 kPa. Die Stauchhärte ist ein Maß für die Festigkeit des Schaumstoffes. Die hier angegebenen Werte sind dabei auf eine Kompression von 40% gegenüber der Ausgangshöhe bezogen Die Stauchhärte wird bestimmt nach DIN EN ISO 3386, es wird der CV₄₀ angegeben.

Bei einer weiteren vorteilhaften Ausführungsform weist der Weichschaum eine Stauchhärte auf, welche unter 4 kPa liegt. Besonders bevorzugt liegt die Stauchhärte unterhalb 3,8 kPa, bevorzugt unterhalb 3,6 kPa, bevorzugt unterhalb 3,5 kPa und bevorzugt unterhalb 3,4 kPa, besonders bevorzugt unterhalb 3,3 kPa und besonders bevorzugt unterhalb 3,2 kPa.

Erfindungsgemäß ist das Raumgewicht des Rohschaumes größer als 22 kg/m³, bevorzugt größer als 24 kg/m³, bevorzugt größer als 25 kg/m³. Erfindungsgemäß ist das Raumgewicht des Rohschaumes kleiner als 33 kg/m³, bevorzugt kleiner als 32 kg/m³, bevorzugt kleiner als 31 kg/m³ und besonders bevorzugt kleiner als 30 kg/m³. In umfangreichen Messungen und Untersuchungen konnten auch diese spezifischen Werte für das Raumgewicht des Rohschaumes als besonders günstig ermittelt werden. Insbesondere jedoch ergibt sich eine besonders gute Eignung von PU-Rohweichschäumen, welche die hier beschriebenen physikalischen Eigenschaften in Kombination aufweisen.

Bei einer weiteren vorteilhaften Ausführungsform weist die Acrylatdispersion in homogener Phase dispergierte Acrylatpolymerteilchen auf. Besonders bevorzugt ist das Dichtband mit einem Gewichtsanteil an Acrylatdispersion zur verzögerten Rückstellung derart imprägniert, dass das Dichtband bei 20°C und 50% relativer Luftfeuchtigkeit eine Rückstellung in weniger als 24 Stunden von einem Kompressionsgrad des Dichtbandes von ca. 9% /gleich bis 13% bis zum Fugenverschluss aufweist.

Bevorzugt ist das Dichtband hergestellt unter Anwendung der Schritte der Imprägnierung des Schaumstoffes mit einer wässrigen Polyacrylatdispersion und einer sich hieran anschließenden Trocknung des Bandes.

Bei einer weiteren vorteilhaften Ausführungsform ist das Dichtband in einer Fuge (in der es anzuordnen ist) vollständig expandiert auf 10% - 50% seines Volumens (bei vollständig freier Rückstellung) komprimiert.

Bei einer weiteren vorteilhaften Ausführungsform weist das Dichtband an wenigstens einer seiner Seiten und bevorzugt an einer Breitseite ein Befestigungsmittel insbesondere zur Befestigung an einem Träger, wie beispielsweise einem Rahmenprofil auf. Als Träger kommen neben Rahmenprofilen auch andere Untergründe, wie etwa mineralische Untergründe in Frage, wie etwas Beton, Ziegel und dergleichen. Auch kämen Multifunktions - Bänder mit entsprechenden Trägern in Frage.

Alternativ oder zusätzlich kann das Dichtband auch an einer Seite und insbesondere einer Breitseite eine Profilierung aufweisen. Bei einer weiteren vorteilhaften Ausführungsform weist das Dichtband eine Höhe von mehr als 0,8 cm auf.

Bei einer weiteren vorteilhaften Ausführungsform ist das Dichtband mit einem Gewichtsanteil an Acrylatdispersion zur verzögerten Rückstellung imprägniert, derart, dass das Dichtband bei Temperaturen zwischen 15°C bis 40°C und 50% relativer Luftfeuchtigkeit eine Rückstellverzögerung von mehr als 15 Minuten bei einem Kompressionsgrad des Dichtbandes auf zwischen 9% und 13% (Dichtbandvolumen des komprimierten Dichtbandes von ca. 9% bis 13% in Bezug auf das Dichtbandvolumen bei vollständiger Rückstellung) aufweist. Es wird jedoch darauf hingewiesen, dass bevorzugt die Komprimierung nur in einer Richtung, insbesondere einer Höhenrichtung erfolgt. (bis zur vollständigen Rückstellung desselben aufweist. Bei einer weiteren vorteilhaften Ausführungsform weist das vollständig expandierte Dichtband in seiner Höhe und/oder Breite mehr als 0,8 cm, bevorzugt mehr als 1,5 cm, bevorzugt mehr als 2 cm und besonders bevorzugt mehr als 3 cm auf.

Bei einer weiteren vorteilhaften Ausführungsform weist das zur verzögerten Rückstellung imprägnierte Dichtband eine Luftdurchlässigkeit in einem Bereich von 80 bis 600 l/m²sec und bevorzugt zwischen 80 und 400 l/m²sec und besonders bevorzugt zwischen 90 und 400 l/m² sec auf. Bei einer weiteren vorteilhaften Ausführungsform weist das Acrylatpolymer einen vorgegebenen Gewichtsanteil an ionischen Polymeren auf, wobei dieser Gewichtsanteil besonders bevorzugt unter 65 Gewichts-% liegt. Bevorzugt liegt dieser Gewichtsanteil über 45 Gewichts-% liegt.

Wenn in Bezug auf das Acrylatpolymer von der reinen Binderkomponente des Imprägnats ausgegangen wird, dann liegt dessen Feststoffanteil bei zwischen 50% und 60%. Das Imprägnat enthält neben dem Binderanteil weitere Bestandteile, wie z. B. Aluminiumhydroxid als Flammschutzmittel.

Bei einer weiteren vorteilhaften Ausführungsform handelt es sich bei dem Acrylatpolymer um ein Copolymer. Bevorzugt kann dabei dieses Copolymer weitere Bestandteile mit Butadiin- und/oder Styroleinheiten aufweisen.

Bei einer weiteren vorteilhaften Ausführungsform weist das Acrylatpolymer eine Glasübergangstemperatur von mehr als -70° auf, bevorzugt eine Glasübergangstemperatur, welche zwischen -70°C und +20°C liegt.

Bei einer weiteren vorteilhaften Ausführungsform ist das Dichtband an wenigstens einer seiner Seiten und insbesondere einer Breitseite mit einem Klebemittel beschichtet. Auch wäre es denkbar, dass an dieser besagten Breitseite ein Selbstklebefilm angeordnet ist.

Bei einer weiteren vorteilhaften Ausführungsform ist das Imprägnatmittel derart ausgewählt, dass ein Imprägnatmittelfilm desselben eine Zugfestigkeit von mehr als 0,001 N/m² und/oder von weniger als 5 N/m² aufweist.

Bei einer weiteren vorteilhaften Ausführungsform ist das Imprägniermittel derart ausgewählt, dass ein Imprägniermittelfilm desselben eine Reißdehnung von mehr als 50% und/oder von mehr als 1500% aufweist.

Bei einer weiteren vorteilhaften Ausführungsform weist ein Imprägniermittelfilm des Dichtbandes eine Schichtdicke auf, die zwischen 5 µm und 150 µm liegt.

Bei einer weiteren vorteilhaften Ausführungsform weisen die Acrylatpolymerteilchen des Imprägnats einen mittleren Durchmesser auf, der größer ist als 5 nm und/oder kleiner als 150 µm.

Die im Rahmen dieser Anmeldung getätigten Angaben zur Luftdurchlässigkeit beziehen sich auf eine Bestimmung unter den Normbedingungen eines 10 mm dicken Schaumstückes (vollständig entspannt) bei einem Messunterdruck von 0,5 bar, Prüffläche 100 cm²; Frank-Gerät 21443; DIN ISO 9237.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Dichtband aus einem weichen Polyurethan-Schaumstoff, welches zur verzögerten Rückstellung wenigstens teilweise und bevorzugt vollständig mit einem Imprägnatmittel imprägniert ist, wobei das Imprägnatmittel eine Acrylatdispersion aufweist, wobei der imprägnierte trockene Schaumstoff ein Raumgewicht aufweist, welches größer als 60Kg/m³ und kleiner als 140 kg/m³ ist und das Dichtband mit einem vorgegebenen Komprimierungsgrad auf einer Rolle aufgewickelt ist,
**dadurch gekennzeichnet, dass**
dieser Komprimierungsgrad geringer als 15% der Schaumausgangshöhe und höher als 5% der Schaumausgangshöhe ist, wobei ein Raumgewicht des Rohschaums größer ist als 22kg/m³ und wobei ein Raumgewicht des Rohschaums kleiner ist als 33kg/m³.

2. Dichtband nach Anspruch 1,
**dadurch gekennzeichnet, dass**
der imprägnierte trockene Schaumstoff ein Raumgewicht aufweist, welches größer ist als 70Kg/m³ und/oder der imprägnierte Schaumstoff ein Raumgewicht aufweist, welches kleiner ist als 130Kg/m³.

3. Dichtband nach wenigstens einem der vorangegangenen Ansprüche,
**dadurch gekennzeichnet, dass**
das Dichtband mit einem vorgegebenen Komprimierungsgrad auf einer Rolle aufgewickelt ist und dieser Komprimierungsgrad geringer ist als 13% der Schaumausgangshöhe und/oder höher als 7% der Schaumausgangshöhe.

4. Dichtband nach wenigstens einem der vorangegangenen Ansprüche,
**dadurch gekennzeichnet, dass**
der Polyurethan-Weichschaum eine Stauchhärte aufweist, welche größer ist als 2,0KPa.

5. Dichtband nach wenigstens einem der vorangegangenen Ansprüche,
**dadurch gekennzeichnet, dass**
der Polyurethan-Weichschaum eine Stauchhärte aufweist, welche kleiner ist als 4,0KPa.

6. Dichtband nach wenigstens einem der vorangegangenen Ansprüche,
**dadurch gekennzeichnet, dass**
die Acrylatdispersion in homogener Phase dispergierte Acrylatpolymerteilchen aufweist.

7. Dichtband nach wenigstens einem der vorangegangenen Ansprüche,
**dadurch gekennzeichnet, dass**
das Dichtband mit einem Gewichtsanteil an Acrylatdispersion zur verzögerten Rückstellung derart imprägniert ist, dass das Dichtband bei Temperaturen zwischen 15°C bis 40°C und 50% relativer Luftfeuchtigkeit eine Rückstellverzögerung von weniger als 24 Stunden bei einem Kompressionsgrad des Dichtbands auf ca. 12% aufweist.

## Claims

1. Sealing tape made from a soft polyurethane foam which is at least partially and preferably completely impregnated with an impregnation agent for delayed restoring, wherein the impregnation agent has an acrylate dispersion, wherein the impregnated dry foam has a density which is greater than 60 kg/m³ and less than 140 kg/m³ and the sealing tape is wound on a roll with a predetermined degree of compression,
**characterized in that**
this degree of compression is less than 15% of the initial height of the foam and greater than 5% of the initial height of the foam, wherein a density of the raw foam is smaller than 33 kg/m³.

2. Sealing tape according to claim 1,
**characterized in that**
the impregnated dry foam has a density which is greater than 70 kg/m³ and/or the impregnated foam has a density which is smaller than 130 kg/m³.

3. Sealing tape according to at least one of the preceding claims,
**characterized in that**
the sealing tape is wound on a roll with a predetermined degree of compression and this degree of compression is less than 13% of the initial height of the foam and/or greater than 7% of the initial height of the foam.

4. Sealing tape according to at least one of the preceding claims,
**characterized in that**
the polyurethane soft foam has a compression hardness which is greater than 2.0 kPa.

5. Sealing tape according to at least one of the preceding claims,
**characterized in that**
the polyurethan soft foam has a compression hardness which is smaller than 4.0 kPa.

6. Sealing tape according to at least one of the preceding claims,
**characterized in that**
the acrylate dispersion has acrylate polymer particles dispersed in a homogeneous phase.

7. Sealing tape according to at least one of the preceding claims,
**characterized in that**
the sealing tape with a weight proportion of acrylate dispersion for delayed restoring is impregnated in such a way that the sealing tape has, at temperatures between 15°C up to 40°C and 50% relative air humidity, a restoring delay of less than 24 hours at a degree of compression of the sealing tape to approximately 12%.

## Revendications

1. Bande d'étanchéité en mousse de polyuréthane souple qui est au moins partiellement et de préférence complètement imprégnée d'un agent d'imprégnation pour une reprise de forme retardée, dans lequel l'agent d'imprégnation présente une dispersion d'acrylate, dans lequel la mousse sèche imprégnée a un poids volumique qui est supérieur à 60 kg/m³ et inférieur à 140 kg/m³ et la bande d'étanchéité est enroulée sur un rouleau avec un degré de compression prédéterminé,
**caractérisée en ce que**
ce degré de compression est inférieur à 15% de la hauteur de mousse initiale et supérieur à 5% de la hauteur mousse initiale, le poids volumique de la mousse brute étant supérieur à 22 kg/m³ et le poids volumique de la mousse brute étant inférieur à 33 kg/m³.

2. Bande d'étanchéité selon la revendication 1,
**caractérisée en ce que**
la mousse sèche imprégnée a un poids volumique supérieur à 70 kg/m³ et/ou la mousse imprégnée a un poids volumique inférieur à 130 kg/m³.

3. Bande d'étanchéité selon au moins l'une des revendications précédentes,
**caractérisée en ce que**
la bande d'étanchéité est enroulée sur un rouleau avec un degré de compression prédéterminé et ce degré de compression est inférieur à 13% de la hauteur de mousse initiale et/ou supérieur à 7% de la hauteur de mousse initiale.

4. Bande d'étanchéité selon au moins l'une des revendications précédentes,
**caractérisée en ce que**
la mousse de polyuréthane flexible a une résistance à la compression supérieure à 2,0 KPa.

5. Bande d'étanchéité selon au moins l'une des revendications précédentes,
**caractérisée en ce que**
la mousse de polyuréthane flexible a une résistance à la compression inférieure à 4,0 KPa.

6. Bande d'étanchéité selon au moins l'une des revendications précédentes,
**caractérisée en ce que**
la dispersion d'acrylate a des particules de polymère d'acrylate dispersées dans une phase homogène.

7. Bande d'étanchéité selon au moins l'une des revendications précédentes,
**caractérisée en ce que**
la bande d'étanchéité est imprégnée selon une fraction pondérale de dispersion d'acrylate pour une reprise de forme retardée de telle sorte que la bande d'étanchéité présente un délai de reprise de forme de moins de 24 heures à des températures comprises entre 15 °C et 40 °C et 50% d'humidité relative avec un degré de compression de la bande d'étanchéité d'environ 12%.
